# EUROPEAN PATENT APPLICATION

(11) **EP 1 641 210 A1**
(43) Date of publication of application: **29.03.2006**
(21) Application number: 05001491.9
(22) Date of filing: 25.01.2005
(51) Int. Cl.: H04L 29/06

(54) **Configuration information distribution apparatus and configuration information reception program**

(30) Priority: 17.09.2004 JP 2004270649
(71) Applicant: Fujitsu Ltd., Kawasaki-shi, Kanagawa 211-8588 (JP)
(72) Inventor: Taniguchi, Hiroyuki, Fujitsu Limited, Kawasaki-shi Kangawa 211-8588 (JP); Sato, Izuru, Fujitsu Limited, Kawasaki-shi Kangawa 211-8588 (JP); Ohnishi, Takeshi, Fujitsu Network Techn.Ltd., Yokohama-shi Kangawa 222-0033 (JP)
(74) Representative: HOFFMANN EITLE

(57) **Abstract**

A setting information distribution apparatus belonging to a network, comprises: authentication unit that accepts and authenticates an authentication request given from a user terminal requesting access authentication by use of a network access authentication procedure between a user terminal and the network; collection unit that collects setting data to be set in the user terminal from a second device belonging to the network; and distribution unit that adds the setting data collected by the collection step to a response message corresponding to the authentication request, and distributes to the user terminal the response message to which the setting data is added.

## Description

### BACKGROUND OF THE INVENTION

The invention relates to a setting information distribution apparatus, a method, a program, a medium and a setting information reception program that serve to set automatically setting data in a user terminal when an end user utilizes a service via a network.

Over the recent years, with an increased number of various networks as typified by IMT-2000 (International Mobile Communications-2000), a wireless LAN, etc. and with a spread of personal computers (PCs) and information terminals such as personal digital assistants (PDAs) that mount (implement) a wireless communication function, an environment for utilizing various services by connecting to the network anytime and everywhere is being organized.

Simultaneously with a rise in the number of users utilizing the services via the network, there arises anxiety about an increase in crimes abusing the network such as spoofing, eavesdropping and so on, and hence the users themselves are required to take measures for security. As the measures for security, it becomes a general practice that the user terminal connecting the network implements a virus/worm detecting application as a countermeasure against viruses and worms, and also implements a Fire Wall as a countermeasure against an intrusion, and an encryption application as a countermeasure against eavesdropping. Further, the encryption in radio transmission is carried out in consideration of user security in a public wireless LAN, etc. on the network side as well.

In the measures for security described above, however, the users themselves need to set a variety of tools and to update virus definitions, etc., and hence a mistake in operation easily occurs. Especially in a mobile environment, there is necessity of changing an encryption key of the wireless LAN, or changing IP addresses of the terminal itself, DNS (Domain Name Server), a gateway, Proxy (server), etc., wherein the mistake in operation likewise easily occurs. In the present condition, the security of the users themselves can not be maintained, and in addition a large influence such as an expansion of damages caused by the viruses and the worms is exerted upon the network side for providing the service. From now on, there will be demanded a technology and an operation method for maintaining the high security while enhancing the usability of the user in the mobile environment that keeps developing in a wide range.
(1) With respect to the wireless LAN that develops as one of access networks, there is a system using IEEE802.1x (Port-based network access control) as a standardized by way of a technology of controlling the user access by automating the encryption key setting. This system is an access control technology implemented in the wireless LAN access point and a switch, whereby the user gaining an access to the network is authenticated in the network by a user ID and a user authenticator in an electronic certificate, and only the approved user can use (the service). Further, at the same time, the operation with the high security can be performed by distributing and updating a wireless LAN encryption key (WEP). The WEP is fragile in its encryption algorithm and is very hazardous because of easily obtaining a tool for decrypting the WEP. Although the security function containing IEEE 802.1x is standardized as IEEE 802.11i and a robust encryption algorithm is adopted now, it takes time to spread the encryption algorithm.
(2) Further, it is necessary for acquiring the IP address of the user terminal, the address of the DNS server, the address of the gateway, etc. to utilize the service by connecting to the network. There is DHCP (Dynamic Host configuration Protocol) specified in RFC2131 as a standardized by way of a technology of automating and dynamically distributing this setting (information). The DHCP does not, however, include the measure for security, wherein a malicious user connecting to the same sub-net pretends (spoofing) to be a DHCP sever and can thus distribute wrong setting to the users.
(3) Furthermore, an access by Web Browser to a Web server, a Mail server, a FTP (File Transfer Protocol) server on the Internet and Intranet must be gained via the Proxy server in some cases. The Proxy server is used for cashing an access request to the Web server and a response thereof, then efficiently transferring requests from a multiplicity of clients and thus controlling the access to the Internet. The Proxy server is employed in a variety of configurations corresponding to the network setting, a load sharing method, etc. and is not therefore easy to set without any error in accordance with circumstances in every organization. There is, however, WPAD (Web Proxy Auto-Discovery Protocol) as a technology of automating and dynamically distributing this setting. The WPAD has, however, no measure for security, whereby the wrong setting can be distributed to the users via the pretended (spoofing) DHCP server.
   If the Mail server and the Web server accessed by the user support a security system such as SSL (Secure Socket Layer), etc., there decreases a possibility of unlawful relaying and eavesdropping via the wireless LAN, and the service can be utilized in safety. Those measures require the system support on both sides of the server and the client, and this takes costs and therefore needs the time for a complete spread thereof.
(4) On the other hand, technologies of accessing the reliable server in safety by avoiding the hazard such as eavesdropping, etc. are IPsec (IP Security) specified in RFC2401 (Security Architecture For the Internet Protocol) as standardized by way of a technology of executing encryption and authentication for assuring confidentiality (secrecy) and security of the IP packet, and a system using IKE (Internet Key Exchange) specified in RFC2401 (The Internet Key Exchange) by way of a key exchange technology for the encryption.
   It is considered that the Mail server and the Web server, which do not individually take the security measure, are disposed in a secure area, and there is provided a means (unit) for protecting a region (route) between the terminal and an ingress of the secure area by IPsec . The encryption key exchange is conducted based on IKE before establishing the secure communications based on IPsec . In a procedure thereof, there is a case in which the server side authenticates the user who makes a key exchange request. The IKE itself is a secure protocol, however, there are may procedures for starting the service in safety from a network access procedure, and usability of the user till the service is actually started in safety is deteriorated.

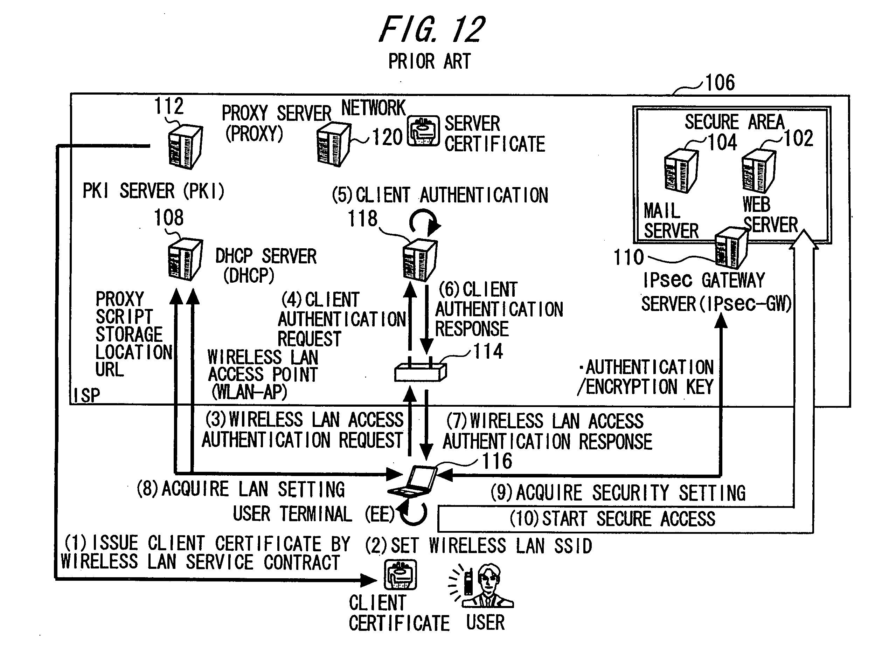

FIG. 12 is an explanatory view of a method of accessing a Web sever 102 and a Mail server 104 for providing the services by accessing the network according to the prior art.

This network is a network that provides a network connection service by, e.g., a carrier (network service provider) and connects to the Internet, etc., and is exemplified by a public wireless LAN. Further, the public wireless LAN connotes a communication network configured by a wireless LAN, etc. in a limited region. The public wireless LAN is, for example, a network configured by an in-office wireless LAN in a shop or an enterprise. Accordingly, the public wireless LAN is, though subordinate to the service of a mobile communication carrier, configured with a limit to the in-office region of the shop or the enterprise by establishing a contract between the mobile communication carrier and the shop or the enterprise.

As shown in FIG. 12, the communication carrier such as an Internet service provider (ISP) administers a public wireless LAN service and provides a network connection service to the Internet, etc.. Installed in a network 106 within the ISP are a DHCP server 108 for distributing IP addresses of a variety of servers, an IPsec gateway server 110 enabling an access to within the network 106 on the basis of IPsec , etc. in order to avoid eavesdropping through the public wireless LAN, and so on.

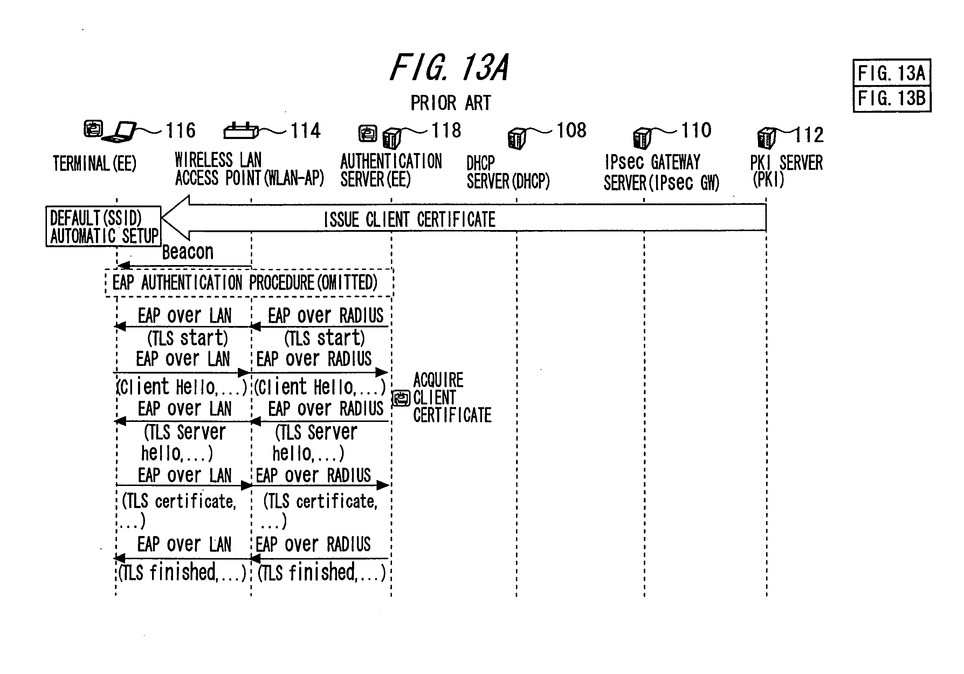

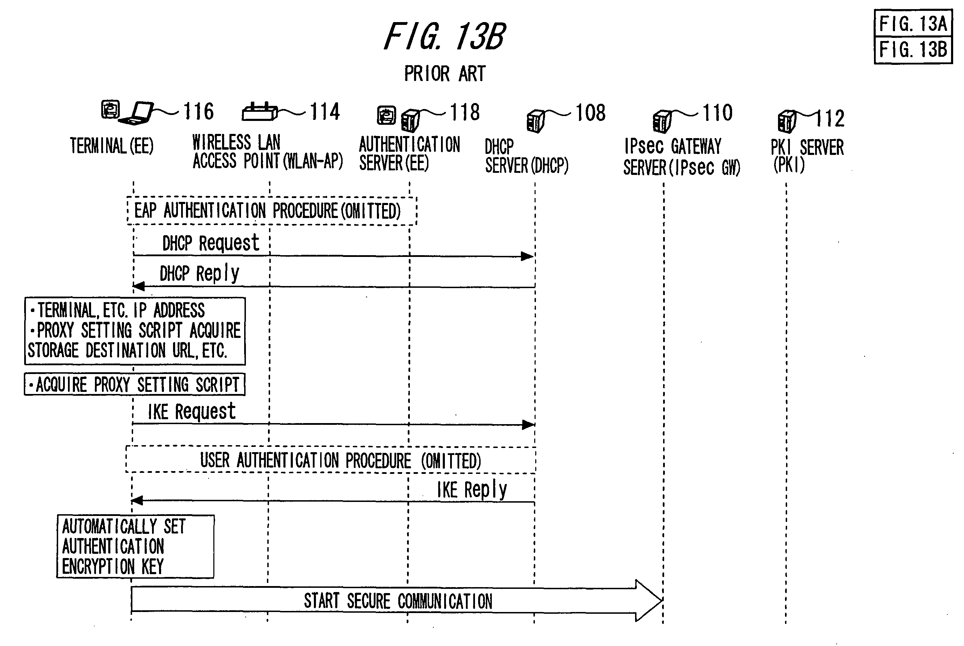

A procedure for a user terminal to connect with and access the Internet from the public wireless LAN, will be explained by way of a sequence in FIG. 13 with reference to FIG. 12.

### <Connection of Network Link (layer 2, data link): and Fragility of Encryption Algorithm>

To start with, the user manually sets an SSID (Subsystem Identification) defined as an identifier of the public wireless LAN service registered beforehand ((2) in FIG. 12). Further, a PKI (Public Key Infrastructure) server 112 issues a client certificate ((1) in FIG. 12). The SSID contained in beacon transmitted by a wireless LAN access point 114 is detected and selected, thereby starting network access authentication ((3) in FIG. 12). The wireless LAN access point 114 temporarily cuts off the communication from the user terminal 116, then accepts authentication information from the user terminal 116, and confirms an in-ISP authentication server 118 about validity to service utility by the user ((4) through (6) in FIG. 12). When a result of the authentication is OK, the wireless LAN access point 114 opens the cut-off network link to the user ((7) in FIG. 12). Data flowing across the network link in the wireless LAN are encrypted by WEP but can be eavesdropped due to fragility of its encryption algorithm, which can not be said to be safe in security.

### <Connection to IP Network: Pretending (spoofing)>

Next, the user terminal 116, when completing the connection to the network link, requests the DHCP server 108 to obtain address information in order to acquire IP addresses of the user terminal 116, the DNS server and the gateway for establishing the connection to the Internet, etc. ((8) in FIG. 12). The DHCP server 108 has no necessity of designating the IP address, etc. of the DHCP server 108 itself beforehand, however, if a device pretending (spoofing) to be a DHCP server 108 exists in the same public wireless LAN, the eavesdropping, service jamming (obstruction) by unlawful relaying are possible, wherein the security can not be ensured.

### <Unlawful Setting by Spoofing>

Further, the user, when finishing the connection to the IP network, starts the use of the network by starting up Web Browser and Mail software ((10) in FIG. 12). At this time, a Proxy address of the Proxy server 120 can be automatically set by the WPAD from the side of the network 106. Auto-setting by the WPAD involves querying the DHCP server 108 and the DNS server as an initial operation thereof. Therefore, if pretended to be the DHCP server 108, unlawful setting is carried out, and the eavesdropping and the service jamming are possible by the unlawful relaying, wherein the security can not be ensured.

### <Usability of User>

There is a case as a countermeasure against the eavesdropping, in which the Mail server 104 and the Web server 102 are disposed in the secure area within the ISP, when protecting a route extending from the terminal to the secure area by IPsec , an IKE procedure defined as a key exchange is started for beginning the secure communications based on IPsec by use of the IP address of the IPsec gateway server 110 that has been previously set by the user. In the IKE procedure, there is a case wherein the user authentication is conducted for the key exchange. The IKE itself is a secure protocol, however, there are may procedures for starting the service in safety from a network access procedure, and usability of the user till the service is actually started in safety is deteriorated.

Moreover, the similar inventions for automatically setting the known terminal are given as follows, however, the problems can not be solved.
Patent document 1 relates to an address setting method and an address setting apparatus. This invention discloses an IP address auto-setting system for a terminal having an arbitrary MAC (Media Access Control) address.
Patent document 2 discloses enabling application setting search/acquisition by LDAP (Lightweight Directory Access Protocol) from a distributed setting information server.
Patent document 3 discloses a communication network system capable of distributing all items of information needed for the application by extending the DHCP.
Patent document 4 discloses logic for verifying whether the information acquired by the DHCP, etc. operates or not, and recovering by setting when OK was given and by storage setting when NG was given.
Patent document 5 discloses auto-setting by capture based on ARP/DHCP (Address Resolution Protocol/Dynamic Host Configuration Protocol).
Patent document 6 discloses Web setting by Redirect.
Patent document 7 discloses auto-setting based on PPP (Point-to-Point Protocol).

Non-Patent document 1 (catalogue) discloses an access control system (NAC (Network Admission Control)) in which a NAC-supported application installed into the terminal notifies the network of a state of the measure for security of the user terminal, and the network judges whether the user access is approved or limited or rejected according to a security policy, and notifies the user terminal of a result thereof.
[Patent document 1] Japanese Patent Application Laid-Open Publication No.11-234342
[Patent document 2] Japanese Patent Application Laid-Open Publication No 2000-285053
[Patent document 3] Japanese Patent Application Laid-Open Publication No 2003-162462
[Patent document 4] Japanese Patent Application Laid-Open Publication No 2003-186768
[Patent document 5] U.S.P. No.6, 130, 892
[Patent document 6] U.S.P. No.6, 636, 894
[Patent document 7] U.S.P. No.6, 012, 088

[Non-Patent document 1] "Self Defending Networking (SDN), Self Defending Type Networking Plan, Integrated Next-Generation Security Solution for Protecting Enterprises from Threat of Virus/Worm", Cisco Systems Corp., 2004.

The conventional systems described above are insufficient in terms of the existing protocols and the measures for the system security, and it can not be said that these systems distribute the setting (information) to the user terminal in safety. Particularly, there was a problem that the IP address setting, etc. in the public wireless LAN etc. is conducted without assuring an identity of the server. Moreover, there are many procedures till detecting the network and starting the service in this network in safety, and the usability of the user is deteriorated.

### SUMMARY OF THE INVENTION

The invention was devised to solve those problems, and aims at providing a setting information distribution apparatus, a method, a program, a medium and a setting information reception program that are capable of integrating a variety of service requests and distribution of pieces of setting data that are independently conducted in a single domain, improving usability of a user and assuring accuracy of the distributed information.

To accomplish the object, the invention is characterized by comprising authentication means that accepts and authenticates an authentication request given from a user terminal requesting access authentication by use of a network access authentication procedure between a user terminal and the network, collection means that collects setting data set in the user terminal from a second device belonging to the network, and distribution means that adds the setting data collected by the collection means to a response message corresponding to the authentication request, and distributes to the user terminal the response message to which the setting data is added.

According to the invention, when requesting the access authentication using the network access authentication procedure, the setting data set in the user terminal are collected from the second device belonging to the network, and the collected setting data are distributed in a way that adds the setting data to the response message corresponding to the authentication request, thereby making it possible to integrate the variety of service requests and the distribution of the setting data, which are conducted independently in the single domain.

Further, the invention is characterized by making a computer function as authentication request means that makes an authentication request by, when requesting a network for access authentication, adding data representing a request for setting data to be set in a user terminal, reception means that receives a response message corresponding to the authentication request, and setting means that extracts the setting data from an extended field in the response message received by the reception means and automatically sets the setting data in the user terminal.

According to the invention, when requesting the network for the access authentication, the setting data is extracted from the extended field in the response message corresponding to the authentication request and automatically set in the user terminal, and hence the usability of the user can be improved.

Moreover, the invention is characterized by further comprising confirmation means that confirms validity of the response message by verifying a signature made within a network.

According to the invention, the validity of the response message is confirmed by verifying the signature made within a network, and therefore the accuracy of the distributed information can be assured.

### DESCRIPTION OF THE DRAWINGS

FIG.1 is an explanatory view of a terminal auto-setting service according to the invention.
FIG.2 is an explanatory view of showing an example of a sequence of the terminal auto-setting service according to the invention.
FIG.3 is an explanatory view of functional blocks and a system according to the invention.
FIG.4 is an explanatory diagram showing details of a TLS protocol (Client Hello).
FIG.5 is an explanatory diagram showing details of a TLS protocol (Server Finished).

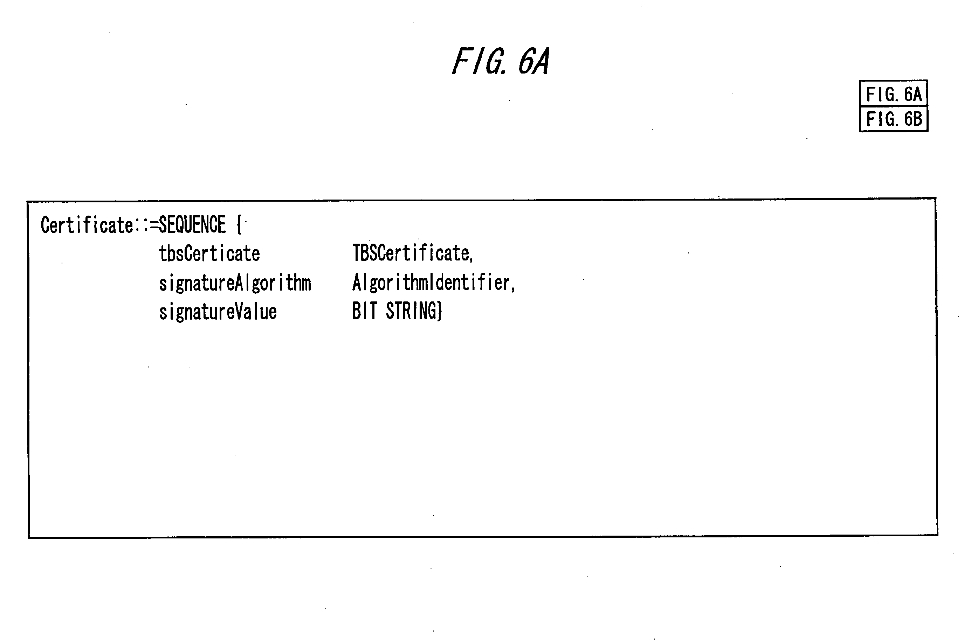

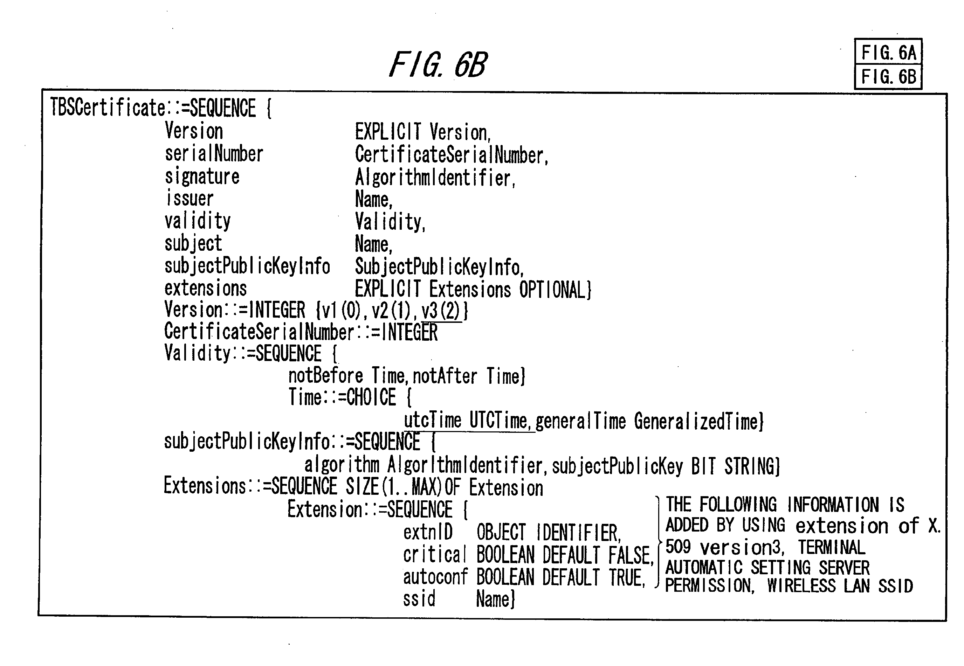

FIG.6 is an explanatory diagram showing detailed example of an electronic certificate.
FIG.7 is a flowchart showing one example (SS1) of a whole processing flow of a security server SS.
FIG.8 is a flowchart showing one example (SS2) of the whole processing flow of the security server SS.
FIG.9 is a flowchart showing one example (EE0) of a whole processing flow of a user terminal EE.
FIG.10 is a flowchart showing one example (EE1) of the whole processing flow of the user terminal EE.
FIG.11 is a flowchart showing one example (EE2) of the whole processing flow of the user terminal EE.
FIG.12 is an explanatory view of a terminal auto-setting service according to the prior art, showing a method of accessing a Web server and a Mail server that provide services by accessing a network in the prior art.
FIG.13 is an explanatory diagram showing a sequence example of the terminal auto-setting service according to the prior art.

### DETAILED DESCRIPTION OF THE INVENTION

Next, a best mode for carrying out the invention will hereinafter be described with reference to the drawings.

### <Outline of System Functions>

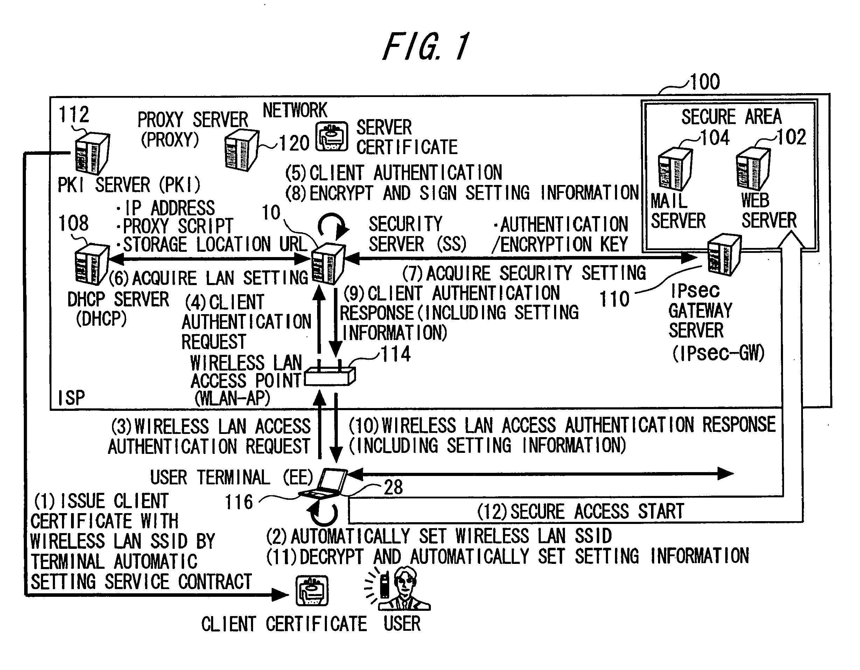

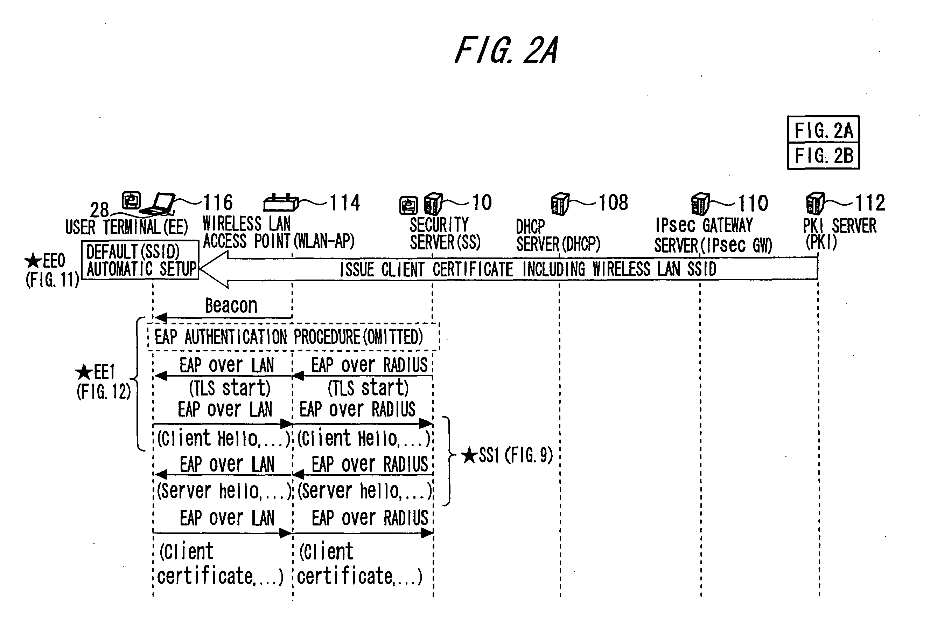

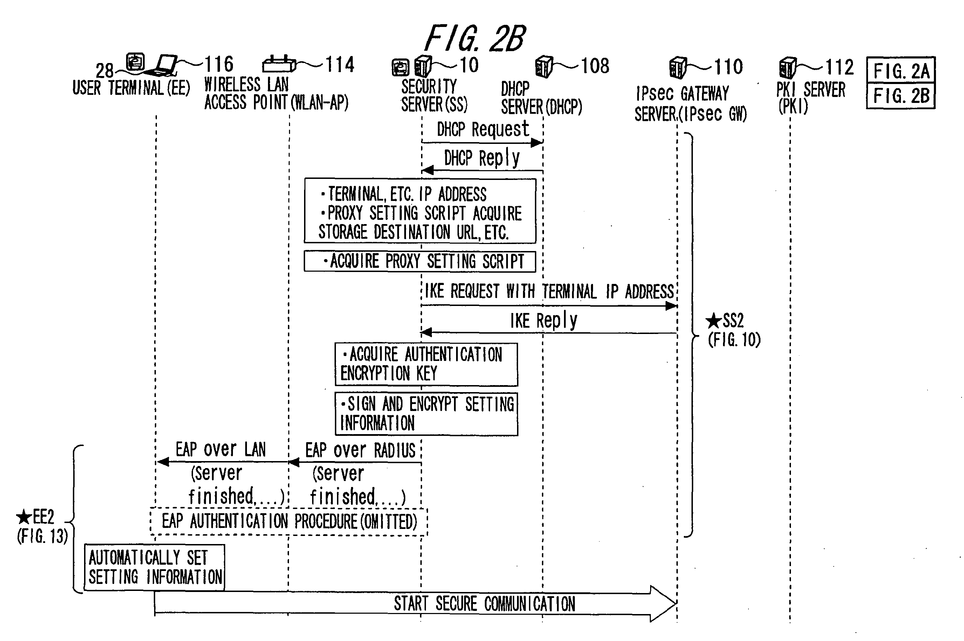

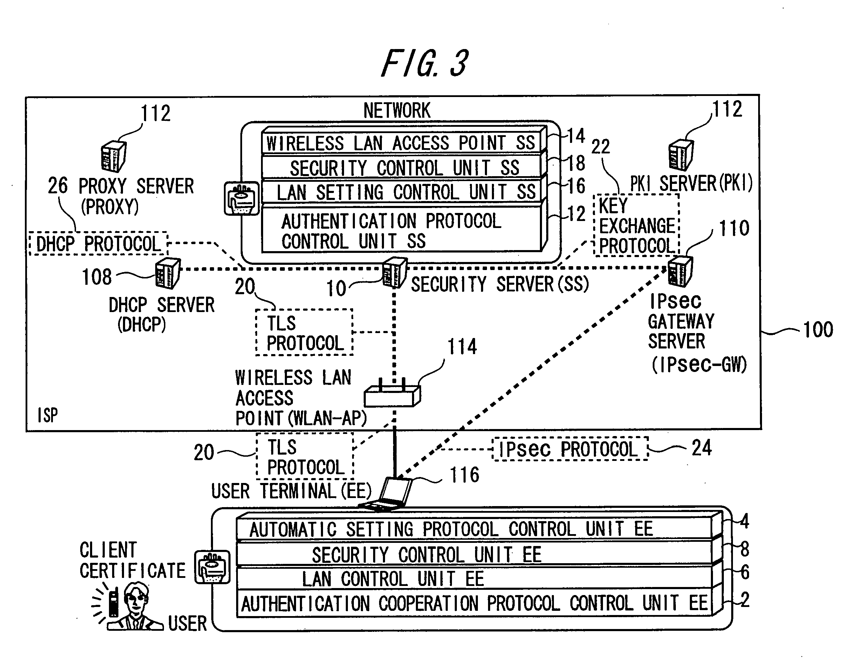

FIGS. 1 and 2 respectively show examples of a terminal automatic setting (auto-setting) service and a service sequence thereof according to the invention. Further, FIG. 3 shows functional blocks of the invention.

An outline of the system functions related to the invention will hereinafter be explained with reference to FIG. 3.

### <Network 100>

A network 100 is an Internet service provider (ISP) for providing every user with an IP network service, and assigns an IP address to a user terminal 116 in order to provide an Internet connection service by providing a wireless LAN access point 114 (WLAN-AP). The network 100 generally includes a DHCP server 108 having a function of dynamically assigning the IP address, a function of distributing a storage destination URL (Uniform Resource Locator) to an auto-setting script of a Proxy server 120 or the like, and so forth. Moreover, an IPsec (IP Security) gateway server 110 having a function of effecting encryption and decryption between the user terminal 116 and the gateway itself is provided at an ingress of a secure area existing within the network 100, which the user is accessible to. The network 100 according to the invention includes, in addition to these components, a PKI (Public Key Infrastructure) server 112 for issuing an electronic certificate needed for the user to utilize the service, and a security server (SS) having an authentication function of executing an authentication approval process for the user terminal 116 and a terminal auto-setting function.

Given next are respective explanations of <1>User Terminal 116, <2>Security Server, <3>DHCP Server 108, <4>IPsec Gateway Server 110, <5>PKI Server 112, <6>TLS Protocol, Key Exchange Protocol, <7>IPsec Protocol, and <8>DHCP Protocol.

### <1. User Terminal 116>

The terminal is constructed of four control units that will be described as follows. To begin with, (i) an authentication protocol control unit EE2 executes a user authentication procedure invoked from a network access application used when the user utilizes the server and based on the electronic certificate. (ii) The auto-setting protocol control unit EE4 is invoked from an authentication protocol control unit EE2 and executes setting in a variety of control units on the basis of auto-setting information such as setting data, etc. stored in a response message. Then, (iii) the LAN control unit EE6 sets various types of IP addresses of the user terminal 116, a gateway server, a DNS (Domain Name Server) server, a Proxy server 120 and so forth. Still further, (iv) a second control unit EE8 executes secure communications with the IPsec gateway server 110 on the basis of an encryption key and an authentication key as in the case of a general type of IPsec client.

### <2. Security Server 10>

A security server 10 is constructed of four control units that will hereinafter be explained. To start with, (i) an authentication protocol control unit SS12 has a user authentication function based on an electronic certificate and an authentication function of authenticating validity of the electronic certificate. Next, (ii) an auto-setting protocol control unit SS14 is invoked from an authentication protocol control unit SS12, and transfers collected pieces of setting information (setting data) onto an extended approval response message via a LAN setting control unit SS16 in order to perform various categories of auto-setting. Then, (iii) the LAN setting control unit SS16 manages the wireless access point 114, the DHCP server 108, etc. within the network 100, and collects proper pieces of LAN setting information (such as an IP address of the terminal, IP addresses of the gateway and of the DNS server, a storage destination URL of the auto-setting script file of the Proxy server 120), and so forth) according to a condition by use of the DHCP protocol, etc.. Moreover, (iv) a security setting control unit SS18 manages the IPsec gateway server 110, etc., and gathers pieces of security setting information (such as the encryption key, the authentication key, etc.) according to a condition by use of the key exchange protocol.

### <3. DHCP Server 108>

The DHCP server 108 includes a LAN setting function (such as assigning the IP address to the terminal, distributing the IP addresses of the DNS server and of the gateway server, notifying of the storage destination URL of the auto-setting script of the Proxy server 120, and so on) required for the user terminal 116 to connect with the network 100. In the embodiment, the DHCP server 108 is a general type of server that complies with RFC2131 defined as a standardized , and supports a WPAD function (an option responding to the storage destination URL of the auto-setting script of the Proxy server 120) supported as a standard by the DHCP server 108 which is provided by Microsoft Corp. in addition to the LAN setting function.

### <4. IPsec Gateway Server 110>

The IPsec gateway server 110 has a security setting function (such as the encryption key, the authentication key, etc.) needed for the user terminal 116 to connect with the secure network 100 and a security execution function based on this security setting function. In the embodiment, the IPsec gateway server 110 is a general type of gateway server pursuant to IPsec specified in RFC2401 (Security Architecture for the Internet Protocol) defined as a standardized or IKE (Internet Key Exchange) specified in RFC2409 (The Internet Key Exchange) as a key exchange technology for encryption.

### <5. PKI Server 112>

The PKI (Public Key Infrastructure) server 112 is constructed of a management function of issuing and invalidating a PKI electronic certificate and of a database for storing the electronic certificate. An electronic certificate format is an extended version of the format specified in RFC3280 by IETF (Internet Engineering Task Force), wherein an extension (extended field) is provided for storing necessary setting information before the terminal connects to the network 100. In the embodiment, this extension (extended field) is stored with SSID for identifying the wireless LAN access point 114.

### <6. TLS Protocol 20>

A TLS (Transport Layer Security) protocol 20 is an authentication protocol used among the user terminal 116, the wireless LAN access point 114 and the security server 10. The TLS protocol 20 serves to transmit, when the user terminal 116 utilizes a public wireless LAN service, a client electronic certificate used for the security server 10 to authenticate the user terminal 116, a server certificate used for the user terminal 116 to authenticate the security server 10 or the wireless LAN access point 114, and also the auto-setting information to the user terminal 116.

In the embodiment of the invention, it is assumed that EAP-TLS (Extensible Authentication Protocol)-(Transport Layer Security) Protocol, EAP-TTLS Protocol and PEAP Protocol which are supported by IEEE802.1x exist between the user terminal 116 and the wireless access point 114, and RADIUS (Remote Authentication Dial-In User Service) Protocol including EAP exists between the wireless LAN access point 114 and the security server 10.

The transmission of the auto-setting information required in the embodiment of the invention involves utilizing a TLS extension specified in RFC3546 by IETF (Internet Engineering Task Force) as a standardization organization, and is actualized by describing new information elements for the auto-setting in an extension message. The information elements described therein are the information about the LAN setting such as the IP address, etc. and the security setting such as the IPsec-based encryption key, etc..

### <6. Key Exchange Protocol 22>

A key exchange protocol 22 is a protocol used between the security server 10 and the IPsec gateway server 110. In the embodiment, the key exchange protocol 22 involves using a general type of protocol that complies with IKE specified in RFC2409 (The Internet Key Exchange) defined as the standardized

### <7. IPsec protocol 24>

An IPsec protocol 24 is a secure session protocol used between the user terminal 116 and the IPsec gateway server 110. In the embodiment, the IP sec protocol 24 involves employing a general type of protocol specified in IPsec (IP Security) specified in RFC2401 (Security Architecture for the Internet Protocol) defined as a standardized .

### <8. DHCP Protocol 26>

A DHCP protocol 26 is an auto-setting protocol used between the security server 10 and the DHCP server 108. In the embodiment, there is used the general type of DHCP server 108 that complies with RFC2131 (Dynamic Host Configuration Protocol) defined as the standardized and, in addition, supports the WPAD function (the option responding to the storage destination URL of the auto-setting script of the Proxy server 120) supported as the standard by the DHCP server 108 which is provided by Microsoft Corp..

### <Auto-Setting Service>

FIG. 1 shows one example of an auto-setting service according to the invention. This is a model in which the user establishing a contract with an ISP (Internet Service Provider) for providing the public wireless LAN service accesses the information retained in an ISP security area. A premise is that the ISP issues, based on the contract with the user, to the user a client certificate based on a public key cipher, which is stored with an SSID (Subsystem Identification) of the wireless LAN access point 114 in the wireless LAN service, and a route certificate (a client certificate) for verifying a source of issuing the electronic certificate via (by use of) the PKI server 112. Further, the security server 10 retains a server certificate for assuring that the server in the network 100 is a normal server and for conducting a digital signature for preventing falsification. A service sequence in FIG. 2 will be described by way of details of the embodiment with reference to FIG. 1.

The user stores directly the user terminal 116 with the client certificate issued from the ISP or stores the client certificate on an external device such as an IC card 28, etc. and, when utilizing the service, connects the external device to the user terminal 116 ((1) in FIG. 1). At this time, the auto-setting protocol control unit extracts the SSID for the wireless LAN service which is stored within the client certificate, and sets the SSID as a default in the LAN control unit EE6 for controlling the access to the wireless LAN ((2) in FIG. 1). The user is able to effect this presetting without being aware of this.

### <Processing of EE0>

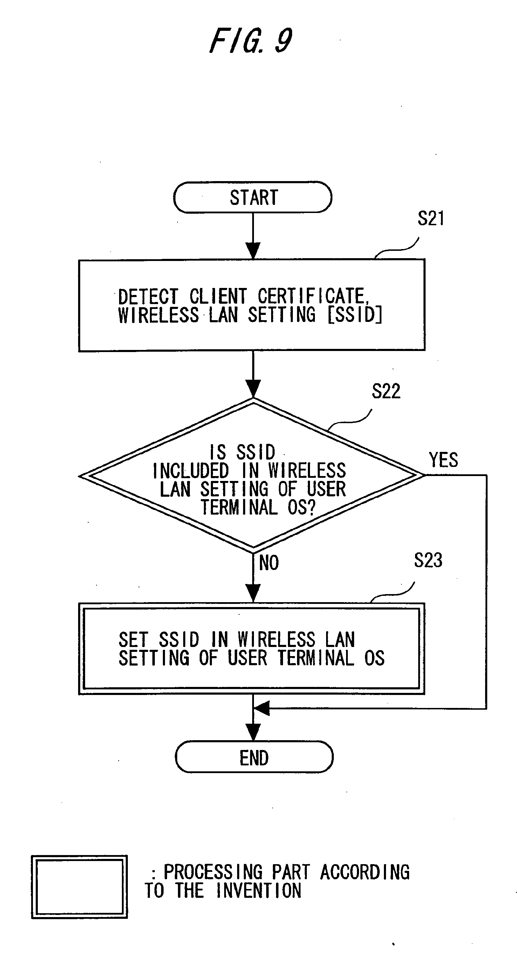

FIG. 9 shows a processing flow of this user terminal 116. The SSID (the wireless LAN setting) in the client certificate is detected (S21), and it is judged whether or not the SSID detected from the client certificate is contained in the wireless LAN setting of an operating system (OS) on the user terminal 116 (S22). When the SSID is contained in the wireless LAN setting, the SSID setting process is terminated. When the SSID is not contained in the wireless LAN setting, the SSID is set in the wireless LAN setting of the OS on the user terminal 116 (S23).

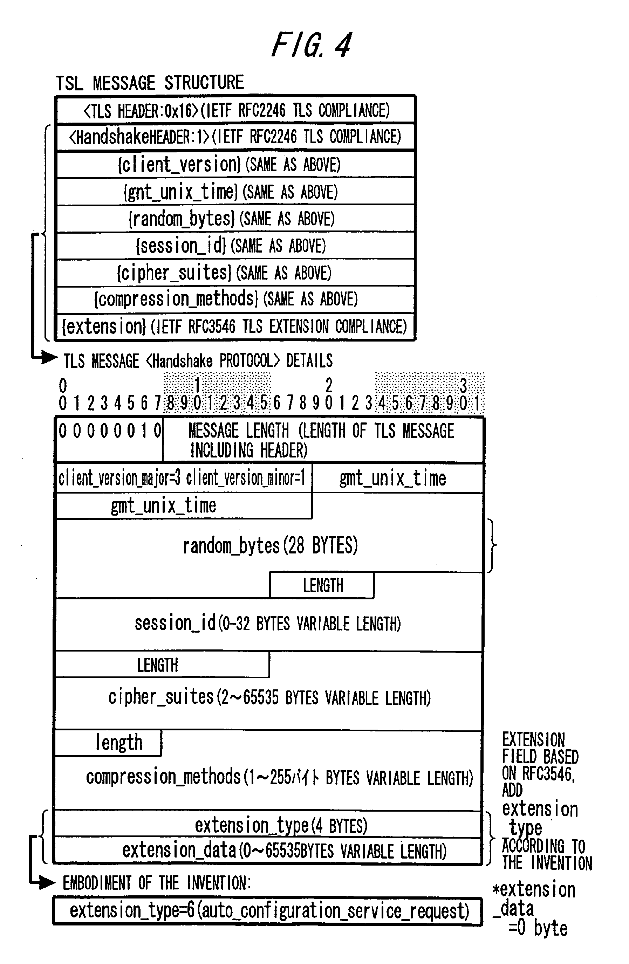

Next, the LAN control unit EE6 of the user terminal 116 compares an SSID contained in beacon transmitted by the wireless LAN access point 114 for the wireless LAN service with the SSID in the client certificate as the electronic certificate, thus starting the network access authentication via the authentication protocol control unit EE2 ((3) in FIG. 1). This process is executed by a function of a general-purpose OS such as Windows XP. On this occasion, through a TLS (Client Hello in FIG. 4) message defined as an authentication start message, the network 1200 is notified of the user terminal 116 making a request for the auto-setting service and starts processing for the auto-setting service. To be specific, information (extension = 6) stored in an extended field (extended field) according to RFC3546 in FIG. 4 represents the auto-setting service request. If unable to effect the auto-setting on the side of the network 100, the processing is executed as an authentication procedure NG.

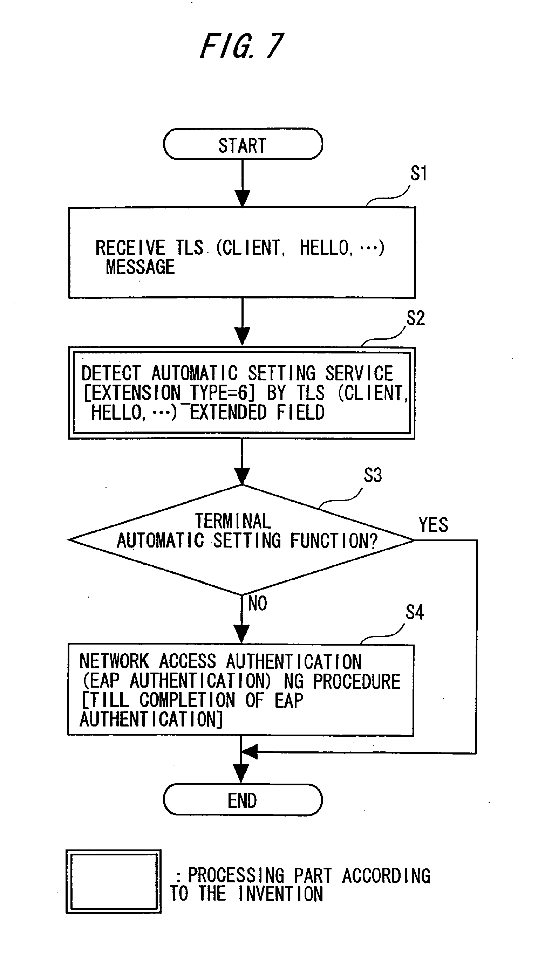

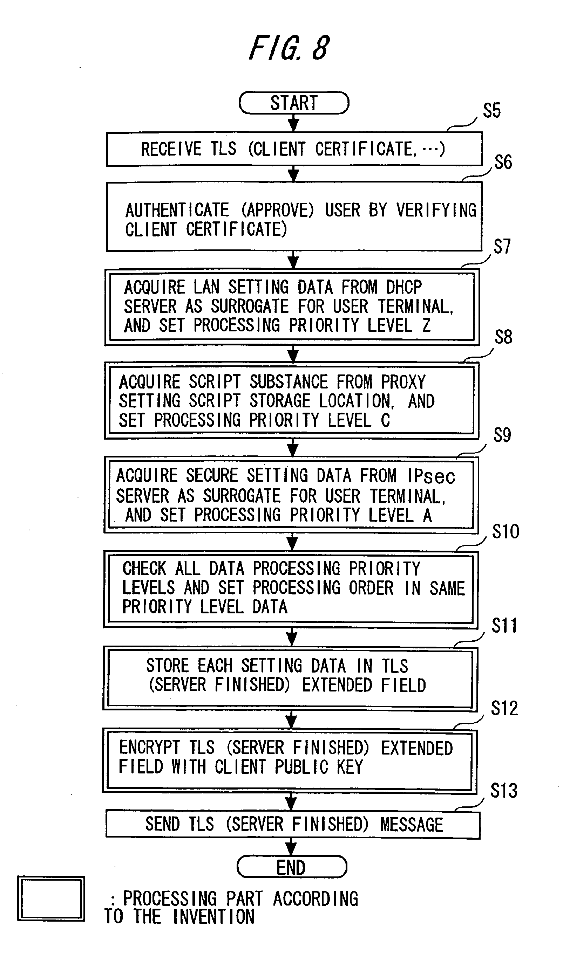

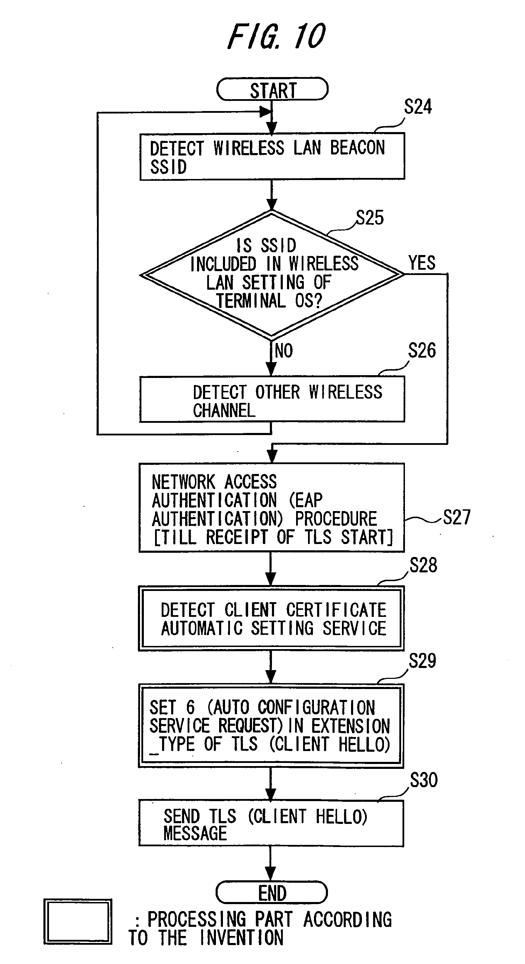

FIG. 10 (EE1) shows a processing flow of this user terminal 116. Further, FIG. 7 (SS1) and FIG. 8(SS2) show a processing flow of the security server 10.

### <Processing of EE1>

The user terminal 116 detects the SSID contained in the beacon transmitted by the wireless LAN access point 114 (S24). It is judged whether or not the SSID detected from the client certificate is contained in the wireless LAN setting of the OS on the user terminal 116 (S25). When the SSID is contained in the wireless LAN setting, the user terminal 116 starts a network access authentication (EAP) procedure (S27). When the detected SSID is different from the wireless LAN setting of the user terminal 116, the user terminal 116 detects other wireless LAN channel (S26).

Next, when the user terminal 116 receives TLS start, the auto-setting service in the client certificate is detected (S28), "6" is set in extension type in the extended field of TLS (Client Hello (S29), and the TLS (client Hello) message is transmitted to the network 100) the security server via the wireless LAN access point 114 in the embodiment) (S30).

### <Processing of SS1>

FIG. 7 shows a processing flow of the security server 10. The security server 10 receives the TLS (Client Hello) message from the user terminal 116 via the wireless LAN access point 114 (S1). The security server 10 detects an auto-setting service request from the extended field of the TLS message (S2), and judges whether the security server 10 has a terminal auto-setting function or not (S3). When the terminal auto-setting function is provided therein, the security server 10 sends to the user terminal 116 a response that the security server 10 has the terminal auto-setting function via the wireless LAN access point 114. When the terminal auto-setting function is not provided, the security server 10 sends to the user terminal 116 a response that the security server 10 has no terminal auto-setting function via the wireless LAN access point 114. At this time, the security server 10 executes a network access authentication (EAP authentication) NG procedure (S4).

The network access authentication is performed based on the standard IEE802.1x and on a TLS authentication procedure. Based on this procedure, the wireless LAN access point 114 temporarily cuts off the access other than the authentication request from the user. The LAN control unit EE6 of the user terminal 116 requests the wireless LAN access point 114 for the server authentication in order to confirm the validity of the wireless LAN access point 114 to which the user terminal 116 connects. On this occasion, the wireless LAN access point 114 transfers the requests from the user while being switched over to the RADIUS protocol to the security server 10 with which a reliable relationship about a shared key has been established beforehand. The authentication protocol control unit SS12 of the security server 10 transmits the server certificate to the user terminal 116 in response to the request.

The user terminal 116 receiving the server certificate verifies the server certificate by using a route certificate indicating the source of issuing the electronic certificate distributed previously by the authentication protocol control unit EE2, and confirms the validity of the wireless LAN access point 114 and the provider having the security server 10. Thereafter, based on the TLS authentication procedure, the authentication protocol control unit EE2 of the user terminal 116 transmits the client certificate issued from the ISP in order to effect the client authentication requesting the ISP for providing the wireless LAN service to give the authentication approval.

### <Processing of SS2>

FIG. 8 shows a processing flow of the security server 10. The security server 10 receiving the client certificate makes the authentication in such a way that the authentication protocol control unit SS12 verifies the client certificate, thus approving the service (S5, S6). After the approval, before sending a result of the authentication approval back to the user terminal 116, the auto-setting protocol control unit SS14 is invoked from the authentication protocol control unit SS12 and instructs the LAN setting control unit SS16 to obtain the LAN setting (information) containing the IP addresses of the user terminal 116, the DNS server and the gateway from the DHCP server 108, etc. (S7). Next, the auto-setting protocol control unit SS14 instructs the security setting control unit SS18 to obtain an encryption key, etc. needed in the IPsec gateway server 110 and the user terminal 116 in order to permit the user terminal 116 to access the security area.

The LAN setting control unit SS16 identifies the wireless LAN access point 114 from which the authentication request has been transferred, thereby determining the DHCP server 108 to be automatically set in the user terminal 116. Subsequently, the information (such as the IP addresses, etc.) that should be set in the user terminal 116 is acquired by using the DHCP protocol 26, etc.. Further, after acquiring the storage destination URL of the auto-setting script file of the Proxy server 120, the script file body is obtained by referring to the storage destination URL (S8). As for the information that should be set in the terminal, processing priority levels are determined according to processing priority level setting policies that have previously been sorted out (classified). A priority level [Z] is attached to the LAN setting obtained by the DHCP so that the setting process is executed finally (S7), and a priority level [C] set when starting up the application utilizing the Proxy setting, is attached to the Proxy setting (S8).

The security control unit SS acquires the common key assigned to every user beforehand from the database, or acquires the information (such as the encryption key, etc.) that should be set in the user terminal 116 by use of the IKE protocol from the IPsec gateway server 110 in the security area (S9). At this time, the setting for the access control over the user terminal 116 can be done also on the side of the IPsec gateway server 110 by notifying of the IP address of the user terminal that establishes a secure session. In the embodiment, the encryption key auto-setting with the IPsec gateway server 110 has been referred to, however, the system is capable of acquiring the various categories of setting information by automatically executing, as a surrogate for the user terminal 116, the location registration in Mobile-IP and the registration process in the ISP by using those existing protocols. As for the information that should be set in the user terminal 116, the processing priority levels are determined according to the processing priority level setting policies that have previously been sorted out. A priority level [A] is attached to the IPsec setting obtained by IKE, etc. so that the setting process is executed first (S9).

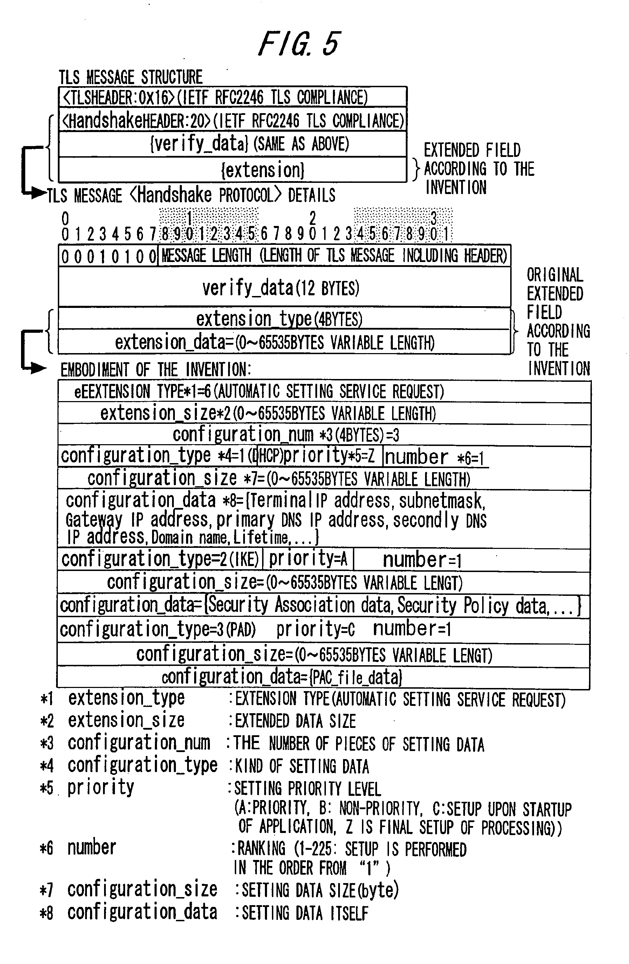

Various pieces of setting information are gathered at the auto-setting protocol control unit SS14, then stored in an area (an original extended field according to the invention) extended from within a ServerFinish message defined as a response message of the TLS authentication procedure (FIG. 5) and can be sent in safety back to the terminal by using a TLS protecting function. The TLS message is stored in the RADIUS protocol and transmitted to the wireless LAN access point 114, and the wireless access point 114 opens the clocked communications on the basis of the result of the authentication of the user terminal 116. Further, the information containing the variety of setting data is transferred to the user terminal 116 by use of the means specified in IEEE802.1x. At this time, the processing priority levels assigned to the setting data in respective items of information are checked, and, if the information of the same priority level exists in the different categories of setting data, the processing order is determined based on the predetermined processing order setting policies (S10). Values of the processing priority levels and of the processing order are described in the priority level setting in the respective TLS extended areas (fields) (S11). Further, the setting information is concealed by encrypting with the public key contained in the client certificate and is sent to the user terminal 116 (S12, S13).

During the auto-setting process of the LAN setting or the security setting, it there is an NG process such as IP address assignment NG, key exchange NG, etc., this NG process is sent as client authentication NG back to the terminal on the basis of the TLS procedure. Moreover, in the case of key exchange NG, a request for releasing the acquired IP address of the user terminal 116 is issued to the LAN setting control unit SS16.

### <Processing of EE" >

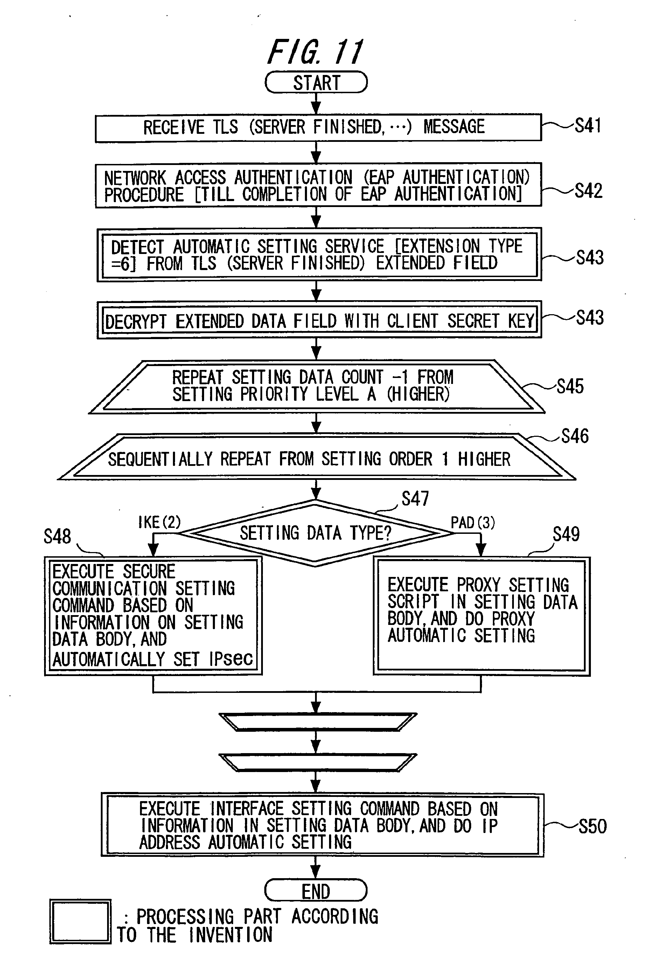

FIG. 11 shows a processing flow of the user terminal 116. The user terminal 116 receiving an authentication approval response message containing the auto-setting information receives this auto-setting information by the authentication protocol control unit EE2 and verifies the TLS protecting function (S41, S42). When the auto-setting service is detected from the TSL extended field (S43), an auto-setting protocol control unit EE4 for processing the auto-setting information items is invoked. The auto-setting protocol control unit EE4 decrypts the auto-setting information contained (stored) in the TSL extended field (the original extended field according to the invention) with the secret key retained by the user terminal 116, and starts processing based on the processing priority levels and the processing order (S44 through S50).

The user terminal 116 sets the setting data in the sequence of the setting priority levels from the highest (S45). On this occasion, when there exist the setting data exhibiting the same setting priority level, the setting process is executed upon the setting data in the sequence of the setting order from the highest (S46). After sequentially repeating the setting, the IP address is automatically set by executing an interface setting command on the basis of the information contained in the setting data body (S50).

The security setting control unit EE executes policy setting and routing setting for performing the secure communications by referring to the encryption key distributed as the security setting (information), the IP address of the IPsec gateway server 100 and the IP address of the terminal.

The LAN setting control unit EE effects the setting of the user terminal 116 for starting the communications by referring to the respective IP addresses, etc. distributed as the LAN setting (information). Further, the LAN setting control unit EE executes the distributed script and thus conducts the setting of the Proxy server 120.

With those described above, simultaneously with the authentication done for the user terminal 116 to connect with the network 100, it is possible to effect each setting in safety and to access the information in the ISP security area quickly and in safety.

The embodiment of the invention has exemplified that in the network connection service from the public wireless LAN, the auto-setting of the IP layer can be attained at the point of time of terminating the network authentication of the link layer lower than the IP layer.

According to the invention, the respective items of setting information can be distributed batchwise to the terminal in the protected authentication procedure conducted when the user terminal 116 accesses the network 100, and it is possible to execute efficiently securely the setting between the ISP and the user terminal 116, which has hitherto been conducted independently insecurely. The management of the respective items of setting information can be performed in a distributed manner by the respective servers, and hence it is feasible to actualize the system exhibiting higher scalability than in the case of managing the setting in concentration. Moreover, the validity assurance using the digital signature, etc. and the encryption-based leakage countermeasure can be done for the message between the server and the client, and therefore the high security can be maintained. This type of secure and efficient terminal auto-setting system enables the user to perform the sure setting at the stage before starting the data communications, and exhibits, in addition to enhancement of the usability, an effect that a damage to the security due to a setting mistake can be reduced also on the side of the network 100.

According to the setting information distribution apparatus, the method, the program, the medium and the setting information reception program of the invention, it is possible to integrate the variety of service requests and the distribution of pieces of setting data that are independently conducted in the single domain, improve the usability of the user and assure accuracy of the distributed information.

## Claims

1. A setting information distribution apparatus belonging to a network, comprising:
an authentication unit that accepts and authenticates an authentication request given from a user terminal requesting access authentication by use of a network access authentication procedure between a user terminal and the network;
a collection unit that collects setting data to be set in the user terminal from a second device belonging to the network; and
a distribution unit that adds the setting data collected by the collection means to a response message corresponding to the authentication request, and distributes to the user terminal the response message to which the setting data is added.

2. A setting information distribution apparatus according to Claim 1, wherein the setting data contain, when there are a plurality of setting data to be set to the user terminal, data that represent processing priority levels for judging a processing sequence to be set by the user terminal.

3. A setting information distribution apparatus according to Claim 1, wherein the setting data, if the processing priority levels of a plurality of setting data to be set to the user terminal are the same, contain data that represent a processing order for judging a processing sequence to be set by the user terminal.

4. A setting information distribution apparatus according to Claim 1, wherein the network includes a system capable of utilizing public key authentication.

5. A setting information distribution apparatus according to Claim 1, further comprising an issuance unit that issues a server certificate signed for protecting the user terminal.

6. A setting information distribution apparatus according to Claim 1, wherein the network access authentication procedure between the user terminal and the network involves using a TLS protocol specified in RFC2246 by the IETF (Internet Engineering Task Force), the setting data set in the user terminal is embedded in an extended field specified in RFC3546, and, in the authentication procedure protected based on the TLS protocol, the setting data set in the user terminal are distributed to the user terminal from the network.

7. A setting information distribution apparatus according to Claim 1, wherein the setting data contain all pieces of data distributable on a DHCP (Dynamic Host Configuration Protocol) protocol specified in RFC2131 by the IETF.

8. A setting information distribution apparatus according to Claim 1, wherein the setting data contain all pieces of data distributable on a IKE (Internet Key Exchange) protocol specified in RFC2409 by the IETF.

9. A setting information distribution apparatus according to Claim 1, further comprising a creation unit that creates beforehand a response message to be sent to the user terminal.

10. A setting information distribution apparatus according to Claim 1, further comprising a query unit that queries a second device such as a DHCP server or an IPsec server about the setting data to be set in the user terminal.

11. A setting information distribution apparatus according to Claim 1, further comprising a determination unit that determines, when there are plural types of setting data, the processing priority levels assigned to the setting data and the processing order on the basis of a predetermined rule.

12. A setting information distribution method that uses a network access authentication procedure between a user terminal and a network, comprising:
an authentication step of accepting and authenticating an authentication request given from the user terminal requesting a first device belonging to the network to effect access authentication;
a collection step of collecting pieces of setting data set in the user terminal from a second device belonging to the network;
a distribution step of making the first device add the setting data collected in the collection step to a response message corresponding to the authentication request, and distribute to the user terminal the response message to which the setting data is added.

13. A setting information distribution method according to Claim 12, wherein the setting data contain, when there are a plurality of setting data to be set to the user terminal, data that represent processing priority levels for judging a processing sequence to be set by the user terminal.

14. A setting information distribution method according to Claim 12, wherein the setting data, if the processing priority levels of a plurality of setting data to be set to the user terminal are the same, contain data that represent a processing order for judging a processing sequence that to be set by the user terminal.

15. A setting information distribution method according to Claim 12, wherein the network includes a system capable of utilizing public key authentication.

16. A setting information distribution method according to Claim 12, further comprising an issuance step of issuing a server certificate signed for protecting the user terminal.

17. A setting information distribution method according to Claim 12, wherein the network access authentication procedure between the user terminal and the network involves using a TLS protocol specified in RFC2246 by the IETF (Internet Engineering Task Force), the setting data set in the user terminal is embedded in an extended field specified in RFC3546, and, in the authentication procedure protected based on the TLS protocol, the setting data set in the user terminal are distributed to the user terminal from the network.

18. A setting information distribution method according to Claim 12, wherein the setting data contain all pieces of data distributable on a DHCP (Dynamic Host Configuration Protocol) protocol specified in RFC2131 by the IETF.

19. A setting information distribution method according to Claim 12, wherein the setting data contain all pieces of data distributable on a IKE (Internet Key Exchange. protocol specified in RFC2409 by the IETF.

20. A setting information distribution method according to Claim 12, wherein the first device creates beforehand a response message to be sent to the user terminal.

21. A setting information distribution method according to Claim 12, further comprising a query step of querying a second device such as a DHCP server or an IPsec server about the setting data to be set in the user terminal.

22. A setting information distribution method according to Claim 11, further comprising a determination step of determining, when there are plural types of setting data, the processing priority levels assigned to the setting data and the processing order on the basis of a predetermined rule.

23. A setting information distribution program executable by a computer, said program comprising:
an authentication step of accepting and authenticating an authentication request given from a user terminal requesting access authentication by use of a network access authentication procedure between a user terminal and the network;
a collection step of collecting setting data set in the user terminal from a second device belonging to the network; and
a distribution step of adding the setting data collected by the collection step to a response message corresponding to the authentication request, and distributing to the user terminal the response message to which the setting data is added.

24. A setting information distribution program according to Claim 23, wherein the setting data contain, when there are a plurality of setting data to be set to the user terminal, data that represent processing priority levels for judging a processing sequence to be set by the user terminal.

25. A setting information distribution program according to Claim 23, wherein the setting data, if the processing priority levels of a plurality of setting data to be set to the user terminal are the same, contain data that represent a processing order for judging a processing sequence to be set by the user terminal.

26. A setting information distribution program according to Claim 23, wherein the network includes a system capable of utilizing public key authentication.

27. A setting information distribution program according to Claim 23, further comprising an issuance step of issuing a server certificate signed for protecting the user terminal.

28. A setting information distribution program according to Claim 23, wherein the network access authentication procedure between the user terminal and the network involves using a TLS protocol specified in RFC2246 by the IETF (Internet Engineering Task Force), the setting data set in the user terminal is embedded in an extended field specified in RFC3546, and, in the authentication procedure protected based on the TLS protocol, the setting data set in the user terminal are distributed to the user terminal from the network.

29. A setting information distribution program according to Claim 23, wherein the setting data contain all pieces of data distributable on a DHCP (Dynamic Host Configuration Protocol) protocol specified in RFC2131 by the IETF.

30. A setting information distribution program according to Claim 23, wherein the setting data contain all pieces of data distributable on a IKE (Internet Key Exchange) protocol specified in RFC2409 by the IETF.

31. A setting information distribution program according to Claim 23, further comprising a creation step of creating beforehand a response message to be sent to the user terminal.

32. A setting information distribution program according to Claim 23, further comprising a query step of querying a second device such as a DHCP server or an IPsec server about the setting data to be set in the user terminal.

33. A setting information distribution program according to Claim 23, further comprising a determination step of determining, when there are a plurality of setting data, the processing priority levels assigned to the setting data and the processing order on the basis of a predetermined rule.

34. A readable-by-computer storage medium storing a program executable by a computer, said program comprising:
an authentication step of accepting and authenticating an authentication request given from a user terminal requesting access authentication by use of a network access authentication procedure between a user terminal and the network;
a collection step of collecting setting data set in the user terminal from a second device belonging to the network; and
a distribution step of adding the setting data collected by the collection step to a response message corresponding to the authentication request, and distributing to the user terminal the response message to which the setting data is added.

35. A setting information reception program executable by a computer, said program comprising:
an authentication request step of generating an authentication request by, when requesting a network for access authentication, adding data representing a request for setting data to be set in a user terminal;
a reception step of receiving a response message corresponding to the authentication request; and
a setting step of extracting the setting data from an extended field in the response message received by the reception step and automatically sets the setting data in the user terminal.

36. A setting information reception program according to Claim 35, further comprising an authentication step of performing authentication by verifying a server certificate through public key authentication in order to confirm security of the network by a mutual authentication procedure.

37. A setting information reception program according to Claim 35, further comprising a confirmation step of confirming validity of the response message by verifying a signature made within a network.

38. A setting information reception program according to Claim 35, wherein the setting step sequentially sets based on data representing, when there are a plurality of setting data, processing priority levels contained in the respective pieces of setting data, or a processing order.

39. A setting information reception program according to Claim 35, wherein the setting step, when there are data that require pre-setting in the mutual authentication procedure, automatically performs the pre-setting on the occasion of installing an electronic certificate into a terminal.
